(19) Europäisches Patentamt
European Patent Office
Office européen des brevets

(11) **EP 2 753 650 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(21) Anmeldenummer: **12753459.2**

(22) Anmeldetag: **22.08.2012**

(51) Int Cl.:
*C08F 220/56* (2006.01)   *C11D 3/37* (2006.01)

(86) Internationale Anmeldenummer:
**PCT/EP2012/066290**

(87) Internationale Veröffentlichungsnummer:
**WO 2013/034437 (14.03.2013 Gazette 2013/11)**

(54) **DIE PRIMÄRWASCHKRAFT VERBESSERNDE POLYMERE WIRKSTOFFE**

POLYMERIC AGENTS THAT IMPROVE PRIMARY WASHING EFFICIENCY

PRINCIPES ACTIFS POLYMÈRES AMÉLIORANT LE POUVOIR DÉTERGENT PRIMAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2011 DE 102011112778**

(43) Veröffentlichungstag der Anmeldung:
**16.07.2014 Patentblatt 2014/29**

(73) Patentinhaber:
• **Henkel AG & Co. KGaA**
**40589 Düsseldorf (DE)**
• **Fraunhofer-Gesellschaft zur Förderung der angewandten Forschung e.V.**
**80686 München (DE)**

(72) Erfinder:
• **PLATH, Nicole**
**40212 Düsseldorf (DE)**
• **VOCKENROTH, Inga, Kerstin**
**40597 Düsseldorf (DE)**
• **WIKKER, Eva-Maria**
**40789 Monheim (DE)**
• **LUNEAU, Benoit**
**40885 Ratingen (DE)**
• **LASCHEWSKY, André**
**14469 Potsdam (DE)**
• **PÄCH, Michael**
**14471 Potsdam (DE)**
• **WISCHERHOFF, Erik**
**14469 Potsdam (DE)**

(56) Entgegenhaltungen:
**US-A1- 2010 240 563**

EP 2 753 650 B1

## EP 2 753 650 B1

**Beschreibung**

Die vorliegende Erfindung betrifft die Verwendung bestimmter Polymere gemäß den Ansprüchen 1 bis 10 zur Verstärkung der Primärwaschkraft von Wasch- oder Reinigungsmitteln beim Waschen von Textilien oder Reinigen harter Oberflächen gegenüber insbesondere öl- und/oder fetthaltigen Anschmutzungen, und Wasch- und Reinigungsmittel, welche derartige Polymere enthalten.

Waschmittel enthalten neben den für den Waschprozess unverzichtbaren Inhaltsstoffen wie Tensiden und Buildermaterialien in der Regel weitere Bestandteile, die man unter dem Begriff Waschhilfsstoffe zusammenfassen kann und die so unterschiedliche Wirkstoffgruppen wie Schaumregulatoren, Vergrauungsinhibitoren, Bleichmittel, Bleichaktivatoren und Farbübertragungsinhibitoren umfassen. Zu derartigen Hilfsstoffen gehören auch Substanzen, deren Anwesenheit die Waschkraft von Tensiden verstärkt, ohne dass sie in der Regel selbst ein ausgeprägtes tensidisches Verhalten aufzuweisen müssen. Gleiches gilt sinngemäß auch für Reinigungsmittel für harte Oberflächen. Derartige Substanzen werden oft als Waschkraftverstärker oder wegen ihrer besonders ausgeprägten Wirkung gegenüber öl- oder fettbasierten Anschmutzungen als "Fat booster" bezeichnet.

US 2010/0240563 beschreibt Polymere aus einer Bisalkylenammoniumverbindung (s. Formel (I) im Abschnitt [0010]; in Tabelle 1 handelt es sich dabei um DADMAC, M1 in Tabelle 1).

Aus der internationalen Patentanmeldung WO 01/57171 A1 sind Wasch- oder Nachspülmittel bekannt, die neben Tensid Copolymere aus anionischen und kationischen Monomeren sowie gegebenenfalls zusätzlich nichtionischen Monomeren enthalten.

Aus der internationalen Patentanmeldung WO 00/56849 A1 ist die farb- und formerhaltende Wirkung kationisch geladener Polymere beim Waschen von Textilien bekannt.

Die soil-release-Wirkung von Block-Copolymeren aus ethylenisch ungesättigten Monomeren und Alkylenoxiden, Alkylenglykolen oder cyclischen Ethern ist aus der internationalen Patentanmeldung WO 03/054044 A2 bekannt.

Die internationale Patentanmeldung WO 03/066791 A1 beschreibt an Substratoberflächen assoziierte Polymere, die zu mindestens 1 Mol-% aus Amidgruppen-haltigen Monomeren bestehen. Überraschenderweise wurde gefunden, dass bestimmte Polymere, welche sich von N,N-Dimethylacrylamid ableiten, besonders gute die Primärwaschkraft verstärkende Eigenschaften haben.

Gegenstand der Erfindung ist die Verwendung von Poly-(N,N-Dimethylacrylamid) und/oder durch Copolymerisation von N,N-Dimethylacrylamid mit einem Co-Monomer, ausgewählt aus Acrylamid, Methacrylamid, N,N-disubstituiertem Acrylamid, N,N-disubstituiertem Methacrylamid, N',N'-disubstituiertem Aminoalkylmethacrylamid, N,N-disubstituiertem Aminoalkylacrylamid, N-Acryloylmorpholin, N-Acryloylpyrrolidin, N-Acryloylpyrrolidon, N-Acryloylpiperidon, N-Acryloylcaprolactam, N-Methacryloylmorpholin, N-Methacryloylpyrrolidin, N-Methacryloylpyrrolidon, N-Methacryloylpiperidon, N-Methacryloylcaprolactam und deren Mischungen, zugänglichen Polymeren zur Verstärkung der Primärwaschkraft von Wasch- oder Reinigungsmitteln beim Waschen von Textilien oder beim Reinigen harter Oberflächen gegenüber insbesondere öl- und/oder fetthaltigen Anschmutzungen, wobei in den genannten substituierten Verbindungen die Substituenten aus Wasserstoff, der Benzylgruppe, linearen und verzweigten Alkyl- und Alkoxyalkylgruppen mit 1 bis 6 C-Atomen und deren Mischungen ausgewählt werden mit der Maßgabe, dass es sich bei den Substituenten im N,N-disubstituiertem Acrylamid nicht um 2 Methylgruppen handelt. Unter den Alkylgruppen sind Ethyl-, Propyl- und Butylgruppen und deren Mischungen bevorzugt. Unter den Alkoxyalkylgruppen sind Alkoxymethylgruppen bevorzugt, wobei der Alkoxyteil vorzugsweise eine Propoxy- oder Butoxygruppe ist.

Sofern es sich bei den Polymeren um aus mehreren Monomeren zusammengesetzte Copolymere handelt, weisen sie N,N-Dimethylacrylamid und das oder die weitere(n) Monomer(e) vorzugsweise im Molverhältnis von 1:99 bis 99:1, insbesondere von 70:30 bis 98:2 und besonders bevorzugt von 80:20 bis 95:5 auf.

Der polymere Wirkstoff weist vorzugsweise ein mittleres Molekulargewicht (hier und im folgenden bei mittleren Molekulargewichtsangaben: Zahlenmittel) im Bereich von 1000 g/mol bis 500000 g/mol, insbesondere von 1100 g/mol bis 150000 g/mol auf.

Das Polymer ist vorzugsweise derart oberflächenaktiv, dass es bei seiner Anwesenheit in einer Konzentration von 0,2 g/l in Wasser bei 25 °C zu einer Erniedrigung der Oberflächenspannung von mindestens 10 %, insbesondere von 30 % bis 70 %, kommt. Der Nachweis der Oberflächenaktivität kann durch die Messung der Oberflächenspannung mittels der Du-Noüy Ringmethode, beispielsweise unter Einsatz eines TE3-Ring/Platten-Tensiometers der Firma Lauda (Lauda-Königshofen), vorgenommen werden. Hierzu wird ein Ring aus beispielsweise Metall, der an einem Torsionskraftmesser befestigt ist, so in Wasser beziehungsweise die wäßrige Lösung eingetaucht, dass sich der Ring unter der Oberfläche der Lösung befindet. Der Ring wird dann langsam heraus gezogen und die Kraft, die auf den Meßring ausgeübt wird, kurz bevor der Flüssigkeitsfilm abreißt, wird mit dem Torsionskraftmesser gemessen. Die Oberflächenspannung kann bei Kenntnis des Durchmessers des Ringes und der Abreißkraft berechnet werden. Bei grenzflächenaktiven Substanzen werden Oberflächenspannungen deutlich unterhalb des Wasserwertes erhalten.

Ein weiterer Gegenstand der Erfindung ist ein Verfahren zum Entfernen von insbesondere öl- und/oder fetthaltigen Anschmutzungen von Textilien oder harten Oberflächen, bei dem ein Wasch- oder Reinigungsmittel und ein genannter polymerer Wirkstoff zum Einsatz kommen. Dieses Verfahren kann manuell oder maschinell, zum Beispiel mit Hilfe einer Haushaltswaschmaschine oder Geschirrspülmaschine, ausgeführt werden. Dabei ist es möglich, das insbesondere flüssige Mittel und den Wirkstoff gleichzeitig oder nacheinander anzuwenden. Die gleichzeitige Anwendung läßt sich besonders vorteilhaft durch den Einsatz eines Mittels, welches den Wirkstoff enthält, durchführen.

Die erfindungsgemäß verwendeten Wirkstoffe sind auf einfachem Wege durch radikalische Polymerisation der Monomere herstellbar, wobei im Falle, dass 2 oder mehrere verschiedene Monomere eingesetzt werden, diese als blockweise oder bevorzugt statistische Copolymerisation durchgeführt wird. Der Einsatz der erfindungsgemäß verwendeten Wirkstoffe führt zu einer signifikant besseren Ablösung von insbesondere Fett- und Kosmetik-Anschmutzungen auf harten Oberflächen und auf Textilien, auch solchen aus Baumwolle oder mit einem Anteil von Baumwolle, als dies bei Verwendung bisher für diesen Zweck bekannter Verbindungen der Fall ist. Alternativ können bei gleich bleibendem Fettablösevermögen bedeutende Mengen an Tensiden eingespart werden.

Weitere Gegenstände sind die statistischen Copolymere Poly(N-benzyl-N-ethylacrylamid-co-N,N-dimethylacrylamid) P(BEAm-co-DMAm) und Poly(N-butoxymethylacrylamid-co-N,N-dimethylacrylamid) P(BMAm-co-DMAm).

Die erfindungsgemäße Verwendung kann im Rahmen eines Wasch- oder Reinigungsprozesses derart erfolgen, dass man den Wirkstoff einer wasch- oder reinigungsmittelhaltigen Flotte zusetzt oder vorzugsweise den Wirkstoff als Bestandteil eines Wasch- oder Reinigungsmittels in die Flotte einbringt, wobei die Konzentration an Wirkstoff in der Flotte vorzugsweise im Bereich von 0,01 g/l bis 0,5 g/l, insbesondere von 0,02 g/l bis 0,2 g/l liegt.

Ein weiterer Gegenstand der Erfindung ist daher ein Wasch- oder Reinigungsmittel, enthaltend Poly-(N,N-Dimethylacrylamid) und/oder durch statistische Copolymerisation von N,N-Dimethylacrylamid mit einem Co-Monomer, ausgewählt aus Acrylamid, Methacrylamid, N,N-disubstituiertem Acrylamid, N,N-disubstituiertem Methacrylamid, N',N'-disubstituiertem Aminoalkylmethacrylamid, N,N-disubstituiertem Aminoalkylacrylamid, N-Acryloylmorpholin, N-Acryloylpyrrolidin, N-Acryloylpyrrolidon, N-Acryloylpiperidon, N-Acryloylcaprolactam, N-Methacryloylmorpholin, N-Methacryloylpyrrolidin, N-Methacryloylpyrrolidon, N-Methacryloylpiperidon, N-Methacryloylcaprolactam und deren Mischungen, zugängliches Polymer.

Wasch- oder Reinigungsmittel, die einen erfindungsgemäß zu verwendenden Wirkstoff enthalten oder mit diesem zusammen verwendet oder im erfindungsgemäßen Verfahren eingesetzt werden, können alle üblichen sonstigen Bestandteile derartiger Mittel enthalten, die nicht in unerwünschter Weise mit dem erfindungswesentlichen Wirkstoff wechselwirken. Vorzugsweise wird ein oben definierter Wirkstoff in Mengen von 0,2 Gew.-% bis 10 Gew.-%, insbesondere 0,4 Gew.-% bis 5 Gew.-% in Wasch- oder Reinigungsmittel eingearbeitet.

Überraschenderweise wurde gefunden, dass derartige Wirkstoffe die Wirkung bestimmter anderer Wasch- und Reinigungsmittelinhaltsstoffe positiv beeinflussen und dass umgekehrt die Wirkung des fat booster-Wirkstoffs durch bestimmte andere Inhaltsstoffe noch zusätzlich verstärkt wird. Diese Effekte treten insbesondere bei synthetischen Aniontensiden vom Sulfat- und Sulfonattyp auf, weshalb der Einsatz mindestens dieser und gegebenenfalls eines oder mehrerer der genannten weiteren Inhaltsstoffe zusammen mit erfindungsgemäß zu verwendendem Wirkstoff bevorzugt ist.

Ein Mittel, welches einen erfindungsgemäß zu verwendenden Wirkstoff enthält oder mit diesem zusammen verwendet wird oder im erfindungsgemäßen Verfahren zum Einsatz kommt, enthält vorzugsweise synthetisches Aniontensid vom Sulfat- und/oder Sulfonattyp, insbesondere Alkylbenzolsulfonat, Fettalkylsulfat, Fettalkylethersulfat, Alkyl- und/oder Dialkylsulfosuccinat, Sulfofettsäureester und/oder Sulfofettsäuredisalze, insbesondere in einer Menge im Bereich von 2 Gew.-% bis 25 Gew.-%. Bevorzugt wird das Aniontensid aus den Alkylbenzolsulfonaten, den Alkyl- oder Alkenylsulfaten und/oder den Alkyl- oder Alkenylethersulfaten ausgewählt, in denen die Alkyl- oder Alkenylgruppe 8 bis 22, insbesondere 12 bis 18 C-Atome besitzt. Bei diesen handelt es sich üblicherweise nicht um Einzelsubstanzen, sondern um Schnitte oder Mischungen. Darunter sind solche bevorzugt, deren Anteil an Verbindungen mit längerkettigen Resten im Bereich von 16 bis 18 C-Atomen über 20 Gew.-% beträgt.

Eine weitere Ausführungsform derartiger Mittel umfaßt die Anwesenheit von nichtionischem Tensid, ausgewählt aus Fettalkylpolyglykosiden, Fettalkylpolyalkoxylaten, insbesondere -ethoxylaten und/oder -propoxylaten, Fettsäurepolyhydroxyamiden und/oder Ethoxylierungs- und/oder Propoxylierungsprodukten von Fettalkylaminen, vicinalen Diolen, Fettsäurealkylestern und/oder Fettsäureamiden sowie deren Mischungen, insbesondere in einer Menge im Bereich von 2 Gew.-% bis 25 Gew.-%.

Zu den in Frage kommenden nichtionischen Tensiden gehören die Alkoxylate, insbesondere die Ethoxylate und/oder Propoxylate von gesättigten oder ein- bis mehrfach ungesättigten linearen oder verzweigtkettigen Alkoholen mit 10 bis 22 C-Atomen, vorzugsweise 12 bis 18 C-Atomen. Der Alkoxylierungsgrad der Alkohole liegt dabei in der Regel zwischen 1 und 20, vorzugsweise zwischen 3 und 10. Sie können in bekannter Weise durch Umsetzung der entsprechenden Alkohole mit den entsprechenden Alkylenoxiden hergestellt werden. Geeignet sind insbesondere die Derivate der Fettalkohole, obwohl auch deren verzweigtkettige Isomere, insbesondere sogenannte Oxoalkohole, zur Herstellung verwendbarer Alkoxylate eingesetzt werden können. Brauchbar sind demgemäß die Alkoxylate, insbesondere die Ethoxylate, primärer Alkohole mit linearen, insbesondere Dodecyl-, Tetradecyl-, Hexadecyl- oder Octadecyl-Resten sowie deren Gemische. Außerdem sind entsprechende Alkoxylierungsprodukte von Alkylaminen, vicinalen Diolen und Carbonsäureamiden, die hinsichtlich des Alkylteils den genannten Alkoholen entsprechen, verwendbar. Darüber hinaus kommen die Ethylenoxid- und/oder Propylenoxid-Insertionsprodukte von Fettsäurealkylestern sowie Fettsäurepolyhydroxyamide in Betracht. Zur Einarbeitung in die erfindungsgemäßen Mittel geeignete sogenannte Alkylpolyglykoside sind Verbindungen der allgemeinen Formel $(G)_n$-$OR^{12}$, in der $R^{12}$ einen Alkyl- oder Alkenylrest mit 8 bis 22 C-Atomen, G eine Glykoseeinheit und n eine Zahl zwischen 1 und 10 bedeuten. Bei der Glykosidkomponente $(G)_n$ handelt es sich um Oligo- oder Polymere aus natürlich vorkommenden Aldose- oder Ketose-Monomeren, zu denen insbesondere Glucose, Mannose, Fruktose, Galaktose, Talose, Gulose, Altrose, Allose, Idose, Ribose, Arabinose, Xylose und Lyxose gehören. Die aus derartigen glykosidisch verknüpften Monomeren bestehenden Oligomere werden außer durch die Art der in ihnen enthaltenen Zucker durch deren Anzahl, den sogenannten Oligomerisierungsgrad, charakterisiert. Der Oligomerisierungsgrad n nimmt als analytisch zu ermittelnde Größe im allgemeinen gebrochene Zahlenwerte an; er liegt bei Werten zwischen 1 und 10, bei den vorzugsweise eingesetzten Glykosiden unter einem Wert von 1,5, insbesondere zwischen 1,2 und 1,4. Bevorzugter Monomer-Baustein ist wegen der guten Verfügbarkeit Glucose. Der Alkyl- oder Alkenylteil $R^{12}$ der Glykoside stammt bevorzugt ebenfalls aus leicht zugänglichen Derivaten nachwachsender Rohstoffe, insbesondere aus Fettalkoholen, obwohl auch deren verzweigtkettige Isomere, insbesondere sogenannte Oxoalkohole, zur Herstellung verwendbarer Glykoside eingesetzt werden können. Brauchbar sind demgemäß insbesondere die primären Alkohole mit linearen Octyl-, Decyl-, Dodecyl-, Tetradecyl-, Hexadecyl- oder Octadecylresten sowie deren Gemische. Besonders bevorzugte Alkylglykoside enthalten einen Kokosfettalkylrest, das heißt Mischungen mit im wesentlichen $R^{12}$=Dodecyl und $R^{12}$=Tetradecyl.

Nichtionisches Tensid ist in Mitteln, welche einen erfindungsgemäß verwendeten Wirkstoff enthalten oder im Rahmen der erfindungsgemäßen Verwendung eingesetzt werden, vorzugsweise in Mengen von 1 Gew.-% bis 30 Gew.-%, insbesondere von 1 Gew.-% bis 25 Gew.-% enthalten, wobei Mengen im oberen Teil dieses Bereiches eher in flüssigen Waschmitteln anzutreffen sind und teilchenförmige Waschmittel vorzugsweise eher geringere Mengen von bis zu 5 Gew.-% enthalten.

Die Mittel können stattdessen oder zusätzlich weitere Tenside, vorzugsweise synthetische Aniontenside des Sulfat- oder Sulfonat-Typs, zu denen beispielsweise die bereits genannten Alkylbenzolsulfonate, in Mengen von vorzugsweise nicht über 20 Gew.-%, insbesondere von 0,1 Gew.-% bis 18 Gew.-%, jeweils bezogen auf gesamtes Mittel, enthalten. Als für den Einsatz in derartigen Mitteln besonders geeignete synthetische Aniontenside sind die Alkyl- und/oder Alkenylsulfate mit 8 bis 22 C-Atomen, die ein Alkali-, Ammonium- oder Alkyl- oder Hydroxyalkyl-substituiertes Ammoniumion als Gegenkation tragen, zu nennen. Bevorzugt sind die Derivate der Fettalkohole mit insbesondere 12 bis 18 C-Atomen und deren verzweigtkettiger Analoga, der sogenannten Oxoalkohole. Die Alkyl- und Alkenylsulfate können in bekannter Weise durch Reaktion der entsprechenden Alkoholkomponente mit einem üblichen Sulfatierungsreagenz, insbesondere Schwefeltrioxid oder Chlorsulfonsäure, und anschließende Neutralisation mit Alkali-, Ammonium- oder Alkyl- oder Hydroxyalkyl-substituierten Ammoniumbasen hergestellt werden. Zu den einsetzbaren Tensiden vom Sulfat-Typ gehören auch die sulfatierten Alkoxylierungsprodukte der genannten Alkohole, sogenannte Ethersulfate. Vorzugsweise enthalten derartige Ethersulfate 2 bis 30, insbesondere 4 bis 10 Ethylenglykol-Gruppen pro Molekül. Zu den geeigneten Aniontensiden vom Sulfonat-Typ gehören die durch Umsetzung von Fettsäureestern mit Schwefeltrioxid und anschließender Neutralisation erhältlichen $\alpha$-Sulfoester, insbesondere die sich von Fettsäuren mit 8 bis 22 C-Atomen, vorzugsweise 12 bis 18 C-Atomen, und linearen Alkoholen mit 1 bis 6 C-Atomen, vorzugsweise 1 bis 4 C-Atomen, ableitenden Sulfonierungsprodukte, sowie die durch formale Verseifung aus diesen hervorgehenden Sulfofettsäuren. Bevorzugte Aniontenside sind auch die Salze von Sulfobernsteinsäureestern, die auch als Alkylsulfosuccinate oder Dialkylsulfosuccinate bezeichnet werden, und die Monoester oder Diester der Sulfobernsteinsäure mit Alkoholen, vorzugsweise Fettalkoholen und insbesondere ethoxylierten Fettalkoholen darstellen. Bevorzugte Sulfosuccinate enthalten $C_8$- bis $C_{18}$-Fettalkoholreste oder Mischungen aus diesen. Insbesondere bevorzugte Sulfosuccinate enthalten einen ethoxylierten Fettalkoholrest, der für sich betrachtet ein nichtionisches Tenside darstellt. Dabei sind wiederum Sulfosuccinate, deren Fettalkohol-Reste sich von ethoxylierten Fettalkoholen mit eingeengter Homologenverteilung ableiten, besonders bevorzugt.

Als weitere fakultative tensidische Inhaltsstoffe kommen Seifen in Betracht, wobei gesättigte Fettsäureseifen, wie die Salze der Laurinsäure, Myristinsäure, Palmitinsäure oder Stearinsäure, sowie aus natürlichen Fettsäuregemischen, zum Beispiel Kokos-, Palmkern- oder Talgfettsäuren, abgeleitete Seifen geeignet sind. Insbesondere sind solche Seifengemische bevorzugt, die zu 50 Gew.-% bis 100 Gew.-% aus gesättigten $C_{12}$-$C_{18}$-Fettsäureseifen und zu bis 50 Gew.-% aus Ölsäureseife zusammengesetzt sind. Vorzugsweise ist Seife in Mengen von 0,1 Gew.-% bis 5 Gew.-% enthalten. Insbesondere in flüssigen Mitteln, welche einen erfindungsgemäß verwendeten Wirkstoff enthalten, können jedoch auch höhere Seifenmengen von in der Regel bis zu 20 Gew.-% enthalten sein.

Gewünschtenfalls können die Mittel auch Betaine und/oder kationische Tenside enthalten, die - falls vorhanden - vorzugsweise in Mengen von 0,5 Gew.-% bis 7 Gew.-% eingesetzt werden.

Die Mittel können gewünschtenfalls Bleichmittel auf Persauerstoffbasis, insbesondere in Mengen im Bereich von 5 Gew.-% bis 70 Gew.-%, sowie gegebenenfalls Bleichaktivator, insbesondere in Mengen im Bereich von 2 Gew.-% bis 10 Gew.-%, enthalten. Die in Betracht kommenden Bleichmittel sind vorzugsweise die in Waschmitteln in der Regel verwendeten Persauerstoffverbindungen wie Percarbonsäuren, beispielsweise Dodecandipersäure oder Phthaloylaminoperoxicapronsäure, Wasserstoffperoxid, Alkaliperborat, das als Tetra- oder Monohydrat vorliegen kann, Percarbonat, Perpyrophosphat und Persilikat, die in der Regel als Alkalisalze, insbesondere als Natriumsalze, vorliegen. Derartige Bleichmittel sind in Waschmitteln, welche einen erfindungsgemäß verwendeten Wirkstoff enthalten, vorzugsweise in Mengen bis zu 25 Gew.-%, insbesondere bis zu 15 Gew.-% und besonders bevorzugt von 5 Gew.-% bis 15 Gew.-%, jeweils bezogen auf gesamtes Mittel, vorhanden, wobei insbesondere Percarbonat zum Einsatz kommt. Die fakultativ vorhandene Komponente der Bleichaktivatoren umfaßt die üblicherweise verwendeten N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Urazole, Diketopiperazine, Sulfurylamide und Cyanurate, außerdem Carbonsäureanhydride, insbesondere Phthalsäureanhydrid, Carbonsäureester, insbesondere Natriumisononanoyl-phenolsulfonat, und acylierte Zuckerderivate, insbesondere Pentaacetylglukose, sowie kationische Nitrilderivate wie Trimethylammoniumacetonitril-Salze. Die Bleichaktivatoren können zur Vermeidung der Wechselwirkung mit den Perverbindungen bei der Lagerung in bekannter Weise mit Hüllsubstanzen überzogen und/oder granuliert worden sein, wobei mit Hilfe von Carboxymethylcellulose granuliertes Tetraacetylethylendiamin mit mittleren Korngrößen von 0,01 mm bis 0,8 mm, granuliertes 1,5-Diacetyl-2,4-dioxohexahydro-1,3,5-triazin, und/oder in Teilchenform konfektioniertes Trialkylammoniumacetonitril besonders bevorzugt ist. In Waschmitteln sind derartige Bleichaktivatoren vorzugsweise in Mengen bis zu 8 Gew.-%, insbesondere von 2 Gew.-% bis 6 Gew.-%, jeweils bezogen auf gesamtes Mittel, enthalten.

In einer weiteren Ausführungsform enthält das Mittel wasserlöslichen und/oder wasserunlöslichen Builder, insbesondere ausgewählt aus Alkalialumosilikat, kristallinem Alkalisilikat mit Modul über 1, monomerem Polycarboxylat, polymerem Polycarboxylat und deren Mischungen, insbesondere in Mengen im Bereich von 2,5 Gew.-% bis 60 Gew.-%.

Das Mittel enthält vorzugsweise 20 Gew.-% bis 55 Gew.-% wasserlöslichen und/oder wasserunlöslichen, organischen und/oder anorganischen Builder. Zu den wasserlöslichen organischen Buildersubstanzen gehören insbesondere solche aus der Klasse der Polycarbonsäuren, insbesondere Citronensäure und Zuckersäuren, sowie der polymeren (Poly-)carbonsäuren, insbesondere die durch Oxidation von Polysacchariden zugänglichen Polycarboxylate, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättiger Carbonsäuren liegt im allgemeinen zwischen 5000 g/mol und 200000 g/mol, die der Copolymeren zwischen 2000 g/mol und 200000 g/mol, vorzugsweise 50000 g/mol bis 120000 g/mol, bezogen auf freie Säure. Ein besonders bevorzugtes Acrylsäure-Maleinsäure-Copolymer weist eine relative Molekülmasse von 50000 g/mol bis 100000 g/mol auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei Carbonsäuren und/oder deren Salze sowie als drittes Monomer Vinylalkohol und/oder ein Vinylalkohol-Derivat oder ein Kohlenhydrat enthalten. Das erste saure Monomer oder dessen Salz leitet sich von einer monoethylenisch ungesättigten $C_3$-$C_8$-Carbonsäure und vorzugsweise von einer $C_3$-$C_4$-Monocarbonsäure, insbesondere von (Meth-)acrylsäure ab. Das zweite saure Monomer oder dessen Salz kann ein Derivat einer $C_4$-$C_8$-Dicarbonsäure sein, wobei Maleinsäure besonders bevorzugt ist. Die dritte monomere Einheit wird in diesem Fall von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von $C_1$-$C_4$-Carbonsäuren, mit Vinylalkohol darstellen. Bevorzugte Terpolymere enthalten dabei 60 Gew.-% bis 95 Gew.-%, insbesondere 70 Gew.-% bis 90 Gew.-% (Meth)acrylsäure und/oder (Meth)acrylat, besonders bevorzugt Acrylsäure und/oder Acrylat, und Maleinsäure und/oder Maleinat sowie 5 Gew.-% bis 40 Gew.-%, vorzugsweise 10 Gew.-% bis 30 Gew.-% Vinylalkohol und/oder Vinylacetat. Ganz besonders bevorzugt sind dabei Terpolymere, in denen das Gewichtsverhältnis (Meth)acrylsäure und/oder (Meth)acrylat zu Maleinsäure und/oder Maleat zwischen 1:1 und 4:1, vorzugsweise zwischen 2:1 und 3:1 und insbesondere 2:1 und 2,5:1 liegt. Dabei sind sowohl die Mengen als auch die Gewichtsverhältnisse auf die Säuren bezogen. Das zweite saure Monomer oder dessen Salz kann auch ein Derivat einer Allylsulfonsäure sein, die in 2-Stellung mit einem Alkylrest, vorzugsweise mit einem $C_1$-$C_4$-Alkylrest, oder einem aromatischen Rest, der sich vorzugsweise von Benzol oder Benzol-Derivaten ableitet, substituiert ist. Bevorzugte Terpolymere enthalten dabei 40 Gew.-% bis 60 Gew.-%, insbesondere 45 bis 55 Gew.-% (Meth)acrylsäure und/oder (Meth)acrylat, besonders bevorzugt Acrylsäure und/oder Acrylat, 10 Gew.-% bis 30 Gew.-%, vorzugsweise 15 Gew.-% bis 25 Gew.-% Methallylsulfonsäure und/oder Methallylsulfonat und als drittes Monomer 15 Gew.-% bis 40 Gew.-%, vorzugsweise 20 Gew.-% bis 40 Gew.% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind, besonders bevorzugt ist Saccharose. Durch den Einsatz des dritten Monomers werden vermutlich Sollbruchstellen in dem Polymer eingebaut, die für die gute biologische Abbaubarkeit des Polymers verantwortlich sind. Diese Terpolymere weisen im Allgemeinen eine relative Molekülmasse zwischen 1000 g/mol und 200000 g/mol, vorzugsweise zwischen 2000 g/mol und 50000 g/mol und insbesondere zwischen 3000 g/mol und 10000 g/mol auf. Sie können, insbesondere zur Herstellung flüssiger Mittel, in Form wäßriger Lösungen, vorzugsweise in Form 30- bis 50-gewichtsprozentiger wäßriger Lösungen eingesetzt werden. Alle genannten Polycarbonsäuren werden in der Regel in Form ihrer wasserlöslichen Salze, insbesondere ihre Alkalisalze, eingesetzt.

Derartige organische Buildersubstanzen sind vorzugsweise in Mengen bis zu 40 Gew.-%, insbesondere bis zu 25 Gew.-% und besonders bevorzugt von 1 Gew.-% bis 5 Gew.-% enthalten. Mengen nahe der genannten Obergrenze werden vorzugsweise in pastenförmigen oder flüssigen, insbesondere wasserhaltigen, Mitteln eingesetzt.

Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Alumosilikate in Waschmittelqualität, insbesondere Zeolith NaA und gegebenenfalls NaX, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 $\mu$m auf und bestehen vorzugsweise zu wenigstens 80 Gew.-% aus Teilchen mit einer Größe unter 10 $\mu$m. Ihr Calciumbindevermögen, das nach den Angaben der deutschen Patentschrift DE 24 12 837 bestimmt werden kann, liegt im Bereich von 100 bis 200 mg CaO pro Gramm. Geeignete Substitute oder Teilsubstitute für das genannte Alumosilikat sind kristalline Alkalisilikate, die allein oder im Gemisch mit amorphen Silikaten vorliegen können. Die in den Mitteln als Gerüststoffe brauchbaren Alkalisilikate weisen vorzugsweise ein molares Verhältnis von Alkalioxid zu $SiO_2$ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis $Na_2O:SiO_2$ von 1:2 bis 1:2,8. Derartige amorphe Alkalisilikate sind beispielsweise unter dem Namen Portil® im Handel erhältlich. Solche mit einem molaren Verhältnis $Na_2O:SiO_2$ von 1:1,9 bis 1:2,8 werden im Rahmen der Herstellung bevorzugt als Feststoff und nicht in Form einer Lösung zugegeben. Als kristalline Silikate, die allein oder im Gemisch mit amorphen Silikaten vorliegen können, werden vorzugsweise kristalline Schichtsilikate der allgemeinen Formel $Na_2Si_xO_{2x+1} \cdot yH_2O$ eingesetzt, in der x, das sogenannte Modul, eine Zahl von 1,9 bis 4 und y eine Zahl von 0 bis 20 ist und bevorzugte Werte für x 2, 3 oder 4 sind. Kristalline Schichtsilikate, die unter diese allgemeine Formel fallen, werden beispielsweise in der europäischen Patentanmeldung EP 0 164 514 beschrieben. Bevorzugte kristalline Schichtsilikate sind solche, bei denen x in der genannten allgemeinen Formel die Werte 2 oder 3 annimmt. Insbesondere sind sowohl ß- als auch δ-Natriumdisitikate ($Na_2Si_2O_5 \cdot yH_2O$) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in Mitteln, welche einen erfindungsgemäß zu verwendenden Wirkstoff enthalten, eingesetzt werden. In einer weiteren bevorzugten Ausführungsform erfindungsgemäßer Mittel wird ein kristallines Natriumschichtsilikat mit einem Modul von 2 bis 3 eingesetzt, wie es aus Sand und Soda hergestellt werden kann. Kristalline Natriumsilikate mit einem Modul im Bereich von 1,9 bis 3,5, werden in einer weiteren bevorzugten Ausführungsform von Waschmitteln, welche einen erfindungsgemäß verwendeten Wirkstoff enthalten, eingesetzt. Deren Gehalt an Alkalisilikaten beträgt vorzugsweise 1 Gew.-% bis 50 Gew.-% und insbesondere 5 Gew.-% bis 35 Gew.-%, bezogen auf wasserfreie Aktivsubstanz. Falls als zusätzliche Buildersubstanz auch Alkalialumosilikat, insbesondere Zeolith, vorhanden ist, beträgt der Gehalt an Alkalisilikat vorzugsweise 1 Gew.-% bis 15 Gew.-% und insbesondere 2 Gew.-% bis 8 Gew.-%, bezogen auf wasserfreie Aktivsubstanz. Das Gewichtsverhältnis Alumosilikat zu Silikat, jeweils bezogen auf wasserfreie Aktivsubstanzen, beträgt dann vorzugsweise 4:1 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Zusätzlich zum genannten anorganischen Builder können weitere wasserlösliche oder wasserunlösliche anorganische Substanzen in den Mitteln, welche einen erfindungsgemäß zu verwendenden Wirkstoff enthalten, mit diesem zusammen verwendet oder in erfindungsgemäßen Verfahren eingesetzt werden, enthalten sein. Geeignet sind in diesem Zusammenhang die Alkalicarbonate, Alkalihydrogencarbonate und Alkalisulfate sowie deren Gemische. Derartiges zusätzliches anorganisches Material kann in Mengen bis zu 70 Gew.-% vorhanden sein.

Zusätzlich können die Mittel weitere in Wasch- oder Reinigungsmitteln übliche Bestandteile enthalten. Zu diesen fakultativen Bestandteilen gehören insbesondere Enzyme, Enzymstabilisatoren, Komplexbildner für Schwermetalle, beispielsweise Aminopolycarbonsäuren, Aminohydroxypolycarbonsäuren, Polyphosphonsäuren und/oder Aminopolyphosphonsäuren, Schauminhibitoren, beispielsweise Organopolysiloxane oder Paraffine, Lösungsmittel und optische Aufheller, beispielsweise Stilbendisulfonsäurederivate. Vorzugsweise sind in Mitteln, welche einen erfindungsgemäß verwendeten Wirkstoff enthalten, bis zu 1 Gew.-%, insbesondere 0,01 Gew.-% bis 0,5 Gew.-% optische Aufheller, insbesondere Verbindungen aus der Klasse der substituierten 4,4'-Bis-(2,4,6-triamino-s-triazinyl)-stilben-2,2'-disulfonsäuren, bis zu 5 Gew.-%, insbesondere 0,1 Gew.-% bis 2 Gew.-% Komplexbildner für Schwermetalle, insbesondere Aminoalkylenphosphonsäuren und deren Salze und bis zu 2 Gew.-%, insbesondere 0,1 Gew.-% bis 1 Gew.-% Schauminhibitoren enthalten, wobei sich die genannten Gewichtsanteile jeweils auf gesamtes Mittel beziehen.

Lösungsmittel, die insbesondere bei flüssigen Mitteln eingesetzt werden können, sind neben Wasser vorzugsweise solche, die wassermischbar sind. Zu diesen gehören die niederen Alkohole, beispielsweise Ethanol, Propanol, iso-Propanol, und die isomeren Butanole, Glycerin, niedere Glykole, beispielsweise Ethylen- und Propylenglykol, und die aus den genannten Verbindungsklassen ableitbaren Ether. In derartigen flüssigen Mitteln liegen die erfindungsgemäß verwendeten Wirkstoffe in der Regel gelöst oder in suspendierter Form vor.

Gegebenenfalls anwesende Enzyme werden vorzugsweise aus der Gruppe umfassend Protease, Amylase, Lipase, Cellulase, Hemicellulase, Oxidase, Peroxidase, Pektinase und Mischungen aus diesen ausgewählt. In erster Linie kommt aus Mikroorganismen, wie Bakterien oder Pilzen, gewonnene Protease in Frage. Sie kann in bekannter Weise durch Fermentationsprozesse aus geeigneten Mikroorganismen gewonnen werden. Proteasen sind im Handel beispielsweise unter den Namen BLAP®, Savinase®, Esperase®, Maxatase®, Optimase®, Alcalase®, Durazym® oder Maxapem® erhältlich. Die einsetzbare Lipase kann beispielsweise aus Humicola lanuginosa, aus Bacillus-Arten, aus Pseudomonas-Arten, aus Fusarium-Arten, aus Rhizopus-Arten oder aus Aspergillus-Arten gewonnen werden. Geeignete Lipasen sind beispielsweise unter den Namen Lipolase®, Lipozym®, Lipomax®, Lipex®, Amano®-Lipase, Toyo-Jozo®-Lipase, Meito®-Lipase und Diosynth®-Lipase im Handel erhältlich. Geeignete Amylasen sind beispielsweise unter den Namen Maxamyl®, Termamyl®, Duramyl® und Purafect® OxAm handelsüblich. Die einsetzbare Cellulase kann ein aus Bakterien oder Pilzen gewinnbares Enzym sein, welches ein pH-Optimum vorzugsweise im schwach sauren bis schwach alkalischen Bereich von 6 bis 9,5 aufweist. Derartige Cellulasen sind unter den Namen Celluzyme®, Carezyme® und Ecostone® handelsüblich. Geeignete Pektinasen sind beispielsweise unter den Namen Gamanase®, Pektinex AR®, X-Pect® oder Pectaway® von Novozymes, unter dem Namen Rohapect UF®, Rohapect TPL®, Rohapect PTE100®, Rohapect MPE®, Rohapect MA plus HC, Rohapect DA12L®, Rohapect 10L®, Rohapect B1L® von AB Enzymes und unter dem Namen Pyrolase® von Diversa Corp., San Diego, CA, USA erhältlich.

Zu den gegebenenfalls, insbesondere in flüssigen Mitteln vorhandenen üblichen Enzymstabilisatoren gehören Aminoalkohole, beispielsweise Mono-, Di-, Triethanol- und -propanolamin und deren Mischungen, niedere Carbonsäuren, Borsäure, Alkaliborate, Borsäure-Carbonsäure-Kombinationen, Borsäureester, Boronsäurederivate, Calciumsalze, beispielsweise Ca-Ameisensäure-Kombination, Magnesiumsalze, und/oder schwefelhaltige Reduktionsmittel.

Zu den geeigneten Schauminhibitoren gehören langkettige Seifen, insbesondere Behenseife, Fettsäureamide, Paraffine, Wachse, Mikrokristallinwachse, Organopolysiloxane und deren Gemische, die darüberhinaus mikrofeine, gegebenenfalls silanierte oder anderweitig hydrophobierte Kieselsäure enthalten können. Zum Einsatz in partikelförmigen Mitteln sind derartige Schauminhibitoren vorzugsweise an granulare, wasserlösliche Trägersubstanzen gebunden.

Zu den bekanntlich polyesteraktiven schmutzablösevermögenden Polymeren, die zusätzlich zu den erfindungswesentlichen Wirkstoffen eingesetzt werden können, gehören Copolyester aus Dicarbonsäuren, beispielsweise Adipinsäure, Phthalsäure oder Terephthalsäure, Diolen, beispielsweise Ethylenglykol oder Propylenglykol, und Polydiolen, beispielsweise Polyethylenglykol oder Polypropylenglykol. Zu den bevorzugt eingesetzten schmutzablösevermögenden Polyestern gehören solche Verbindungen, die formal durch Veresterung zweier Monomerteile zugänglich sind, wobei das erste Monomer eine Dicarbonsäure HOOC-Ph-COOH und das zweite Monomer ein Diol HO-(CHR$_{11}$-)$_a$OH, das auch als polymeres Diol H-(O-(CHR$_{11}$-)$_a$)$_b$OH vorliegen kann, ist. Darin bedeutet Ph einen o-, m- oder p-Phenylenrest, der 1 bis 4 Substituenten, ausgewählt aus Alkylresten mit 1 bis 22 C-Atomen, Sulfonsäuregruppen, Carboxylgruppen und deren Mischungen, tragen kann, R$^{11}$ Wasserstoff, einen Alkylrest mit 1 bis 22 C-Atomen und deren Mischungen, a eine Zahl von 2 bis 6 und b eine Zahl von 1 bis 300. Vorzugsweise liegen in den aus diesen erhältlichen Polyestern sowohl Monomerdioleinheiten -O-(CHR$_{11}$-)$_a$O- als auch Polymerdioleinheiten -(O-(CHR$^{11}$-)$_a$)$_b$O- vor. Das molare Verhältnis von Monomerdioleinheiten zu Polymerdioleinheiten beträgt vorzugsweise 100:1 bis 1:100, insbesondere 10:1 bis 1:10. In den Polymerdioleinheiten liegt der Polymerisationsgrad b vorzugsweise im Bereich von 4 bis 200, insbesondere von 12 bis 140. Das Molekulargewicht oder das mittlere Molekulargewicht oder das Maximum der Molekulargewichtsverteilung bevorzugter schmutzablösevermögender Polyester liegt im Bereich von 250 g/mol bis 100000 g/mol, insbesondere von 500 g/mol bis 50000 g/mol. Die dem Rest Ph zugrundeliegende Säure wird vorzugsweise aus Terephtalsäure, Isophthalsäure, Phthalsäure, Trimellithsäure, Mellithsäure, den Isomeren der Sulfophthalsäure, Sulfoisophthalsäure und Sulfoterephtalsäure sowie deren Gemischen ausgewählt. Sofern deren Säuregruppen nicht Teil der Esterbindungen im Polymer sind, liegen sie vorzugsweise in Salzform, insbesondere als Alkali- oder Ammoniumsalz vor. Unter diesen sind die Natrium- und Kaliumsalze besonders bevorzugt. Gewünschtenfalls können statt des Monomers HOOC-Ph-COOH geringe Anteile, insbesondere nicht mehr als 10 Mol-% bezogen auf den Anteil an Ph mit der oben gegebenen Bedeutung, anderer Säuren, die mindestens zwei Carboxylgruppen aufweisen, im schmutzablösevermögenden Polyester enthalten sein. Zu diesen gehören beispielsweise Alkylen- und Alkenylendicarbonsäuren wie Malonsäure, Bernsteinsäure, Fumarsäure, Maleinsäure, Glutarsäure, Adipinsäure, Pimelinsäure, Korksäure, Azelainsäure und Sebacinsäure. Zu den bevorzugten Diolen HO-(CHR$^{11}$-)$_a$OH gehören solche, in denen R$^{11}$ Wasserstoff und a eine Zahl von 2 bis 6 ist, und solche, in denen a den Wert 2 aufweist und R$^{11}$ unter Wasserstoff und den Alkylresten mit 1 bis 10, insbesondere 1 bis 3 C-Atomen ausgewählt wird. Unter den letztgenannten Diolen sind solche der Formel HO-CH$_2$-CHR$^{11}$-OH, in der R$^{11}$ die obengenannte Bedeutung besitzt, besonders bevorzugt. Beispiele für Diolkomponenten sind Ethylenglykol, 1,2-Propylenglykol, 1,3-Propylenglykol, 1,4-Butandiol, 1,5-Pentandiol, 1,6-Hexandiol, 1,8-Octandiol, 1,2-Decandiol, 1,2-Dodecandiol und Neopentylglykol. Besonders bevorzugt unter den polymeren Diolen ist Polyethylenglykol mit einer mittleren Molmasse im Bereich von 1000 g/mol bis 6000 g/mol.

Gewünschtenfalls können diese wie oben beschrieben zusammengestzten Polyester auch endgruppenverschlossen sein, wobei als Endgruppen Alkylgruppen mit 1 bis 22 C-Atomen und Ester von Monocarbonsäuren in Frage kommen. Den über Esterbindungen gebundenen Endgruppen können Alkyl-, Alkenyl- und Arylmonocarbonsäuren mit 5 bis 32 C-Atomen, insbesondere 5 bis 18 C-Atomen, zugrundeliegen. Zu diesen gehören Valeriansäure, Capronsäure, Önanthsäure, Caprylsäure, Pelargonsäure, Caprinsäure, Undecansäure, Undecensäure, Laurinsäure, Lauroleinsäure, Tridecansäure, Myristinsäure, Myristoleinsäure, Pentadecansäure, Palmitinsäure, Stearinsäure, Petroselinsäure, Petroselaidinsäure, Ölsäure, Linolsäure, Linolaidinsäure, Linolensäure, Eläostearinsäure, Arachinsäure, Gadoleinsäure, Arachidonsäure, Behensäure, Erucasäure, Brassidinsäure, Clupanodonsäure, Lignocerinsäure, Cerotinsäure, Melissinsäure, Benzoesäure, die 1 bis 5 Substituenten mit insgesamt bis zu 25 C-Atomen, insbesondere 1 bis 12 C-Atomen tragen kann, beispielsweise tert.-Butylbenzoesäure. Den Endgruppen können auch Hydroxymonocarbonsäuren mit 5 bis 22 C-Atomen zugrundeliegen, zu denen beispielsweise Hydroxyvaleriansäure, Hydroxycapronsäure, Ricinolsäure, deren Hydrierungsprodukt Hydroxystearinsäure sowie o-, m- und p-Hydroxybenzoesäure gehören. Die Hydroxymonocarbonsäuren können ihrerseits über ihre Hydroxylgruppe und ihre Carboxylgruppe miteinander verbunden sein und damit mehrfach in einer Endgruppe vorliegen. Vorzugsweise liegt die Anzahl der Hydroxymonocarbonsäureeinheiten pro Endgruppe, das heißt ihr Oligomerisierungsgrad, im Bereich von 1 bis 50, insbesondere von 1 bis 10. In einer bevorzugten Ausgestaltung der Erfindung werden Polymere aus Ethylenterephthalat und Polyethylenoxid-terephthalat, in denen die Polyethylenglykol-Einheiten Molgewichte von 750 g/mol bis 5000 g/mol aufweisen und das Molverhältnis von Ethylenterephthalat zu Polyethylenoxid-terephthalat 50:50 bis 90:10 beträgt, in Kombination mit einem erfindungswesentlichen Wirkstoff verwendet.

Die schmutzablösevermögenden Polymere sind vorzugsweise wasserlöslich, wobei unter dem Begriff "wasserlöslich" eine Löslichkeit von mindestens 0,01 g, vorzugsweise mindestens 0,1 g des Polymers pro Liter Wasser bei Raumtemperatur und pH 8 verstanden werden soll. Bevorzugt eingesetzte Polymere weisen unter diesen Bedingungen jedoch eine Löslichkeit von mindestens 1 g pro Liter, insbesondere mindestens 10 g pro Liter auf.

Die Herstellung erfindungsgemäßer fester Mittel bietet keine Schwierigkeiten und kann auf bekannte Weise, zum Beispiel durch Sprühtrocknen oder Granulation, erfolgen, wobei Enzyme und eventuelle weitere thermisch empfindliche Inhaltsstoffe wie zum Beispiel Bleichmittel gegebenenfalls später separat zugesetzt werden. Zur Herstellung erfindungsgemäßer Mittel mit erhöhtem Schüttgewicht, insbesondere im Bereich von 650 g/l bis 950 g/l, ist ein einen Extrusionschritt aufweisendes Verfahren bevorzugt.

Zur Herstellung von erfindungsgemäßen Mitteln in Tablettenform, die einphasig oder mehrphasig, einfarbig oder mehrfarbig und insbesondere aus einer Schicht oder aus mehreren, insbesondere aus zwei Schichten bestehen können, geht man vorzugsweise derart vor, dass man alle Bestandteile - gegebenenfalls je einer Schicht - in einem Mischer miteinander vermischt und das Gemisch mittels herkömmlicher Tablettenpressen, beispielsweise Exzenterpressen oder Rundläuferpressen, mit Preßkräften im Bereich von etwa 50 bis 100 kN, vorzugsweise bei 60 bis 70 kN verpreßt. Insbesondere bei mehrschichtigen Tabletten kann es von Vorteil sein, wenn mindestens eine Schicht vorverpreßt wird. Dies wird vorzugsweise bei Preßkräften zwischen 5 und 20 kN, insbesondere bei 10 bis 15 kN durchgeführt. Man erhält so problemlos bruchfeste und dennoch unter Anwendungsbedingungen ausreichend schnell lösliche Tabletten mit Bruch- und Biegefestigkeiten von normalerweise 100 bis 200 N, bevorzugt jedoch über 150 N. Vorzugsweise weist eine derart hergestellte Tablette ein Gewicht von 10 g bis 50 g, insbesondere von 15 g bis 40 g auf. Die Raumform der Tabletten ist beliebig und kann rund, oval oder eckig sein, wobei auch Zwischenformen möglich sind. Ecken und Kanten sind vorteilhafterweise abgerundet. Runde Tabletten weisen vorzugsweise einen Durchmesser von 30 mm bis 40 mm auf. Insbesondere die Größe von eckig oder quaderförmig gestalteten Tabletten, welche überwiegend über die Dosiervorrichtung beispielsweise der Geschirrspülmaschine eingebracht werden, ist abhängig von der Geometrie und dem Volumen dieser Dosiervorrichtung. Beispielhaft bevorzugte Ausführungsformen weisen eine Grundfläche von (20 bis 30 mm) x (34 bis 40 mm), insbesondere von 26x36 mm oder von 24x38 mm auf.

Flüssige oder pastöse erfindungsgemäße Mittel in Form von übliche Lösungsmittel, insbesondere Wasser, enthaltenden Lösungen werden in der Regel durch einfaches Mischen der Inhaltsstoffe, die in Substanz oder als Lösung in einen automatischen Mischer gegeben werden können, hergestellt.

In einer bevorzugten Ausführungsform ist ein Mittel, in das erfindungsgemäß zu verwendender Wirkstoff eingearbeitet wird, flüssig und enthält 1 Gew.-% bis 15 Gew.-%, insbesondere 2 Gew.-% bis 10 Gew.-% nichtionisches Tensid, 2 Gew.-% bis 30 Gew.-%, insbesondere 5 Gew.-% bis 20 Gew.-% synthetisches Aniontensid, bis zu 15 Gew.-%, insbesondere 2 Gew.-% bis 12,5 Gew.-% Seife, 0,5 Gew.-% bis 5 Gew.-%, insbesondere 1 Gew.-% bis 4 Gew.-% organischen Builder, insbesondere Polycarboxylat wie Citrat, bis zu 1,5 Gew.-%, insbesondere 0,1 Gew.-% bis 1 Gew.-% Komplexbildner für Schwermetalle, wie Phosphonat, und neben gegebenenfalls enthaltenem Enzym, Enzymstabilisator, Farb- und/oder Duftstoff Wasser und/oder wassermischbares Lösungsmittel.

In einer weiteren bevorzugten Ausführungsform ist ein Mittel, in das erfindungsgemäß zu verwendender Wirkstoff eingearbeitet wird, teilchenförmig und enthält bis zu 25 Gew.-%, insbesondere 5 Gew.-% bis 20 Gew.-% Bleichmittel, insbesondere Alkalipercarbonat, bis zu 15 Gew.-%, insbesondere 1 Gew.-% bis 10 Gew.-% Bleichaktivator, 20 Gew.-% bis 55 Gew.-% anorganischen Builder, bis zu 10 Gew.-%, insbesondere 2 Gew.-% bis 8 Gew.-% wasserlöslichen organischen Builder, 10 Gew.-% bis 25 Gew.-% synthetisches Aniontensid, 1 Gew.-% bis 5 Gew.-% nichtionisches Tensid und bis zu 25 Gew.-%, insbesondere 0,1 Gew.-% bis 25 Gew.-% anorganische Salze, insbesondere Alkalicarbonat und/oder -hydrogencarbonat.

Beispiele

Beispiel 1: Herstellung von Poly(N-benzyl-N-ethylacrylamid-co-N,N-dimethylacrylamid), P(BEAm-*co*-DMAm)

Die Monomere N, N-Dimethylacrylamid (DMAm) und N-Benzyl-N-ethylacrylamid (BEAm) wurden zusammen mit dem Initiator 2,2'-Azobisisobutyronitril (AIBN) und dem Kettenregler Trithiokohlensäurebutylester-4-butylsulfanylthiocarbonyl-sulfanylmethyl-benzylester (KR) in den in Tabelle 1 angegebenen Mengen in 300 ml Benzol gelöst. Zuvor wurden die Monomere sowie Benzol durch Destillation und der Kettenüberträger und der Initiator durch Umkristallisation gereinigt.

Tabelle 1

| Probe | $m_{DMAm}$ [g] | $m_{BEAm}$ [g] | $m_{KR}$[g] | $m_{AIBN}$ [g] | Ausbeute [Gew.-%] |
|---|---|---|---|---|---|
| 1a | 52,36 | 17,64 | 2,84 | 0,2296 | 64 |
| 1b | 52,36 | 17,64 | 0,95 | 0,0765 | 83 |
| 1c | 52,36 | 17,64 | 0,284 | 0,0382 | 87 |

Die erhaltenen Lösungen wurden 30 min lang mit einem raschen Stickstoffstrom (< 3 ppm $O_2$) gespült. Die gasdicht verschlossenen Gefäße wurden anschließend zur Polymerisation für 24 h in ein Ölbad von 65 °C gestellt. Dann wurde die Reaktion beendet, indem die Reaktionsmischung abgekühlt und belüftet wurde. Die Fällung der Reaktionsgemische in je 2 l Ether lieferte pulvrige, hygroskopische Polymere. Diese wurden zur Entfernung von Benzolspuren in je 700 ml Wasser gelöst und anschließend gefriergetrocknet. Die jeweiligen Ausbeuten nach Fällung in Ether, Trocknung bei 20 mbar / 22 °C und Gefriertrocknung aus Wasser sind in Tabelle 1 verzeichnet. Analyse der Polymere mittels $^1$H-NMR Spektroskopie ergab eine Zusammensetzung aller Proben von 85 mol-% DMAm : 15 mol-% BEAm.
Eine Molmassenbestimmung wurde mittels GPC an Polargel® L-Säulen in Dimethylformamid / 0,1 Gew.-% LiBr bei 50°C durchgeführt. Die Detektion erfolgte mittels Brechungsindex-Detektor. Die Elugramme wurden mit $^1$H-NMR-Endgruppenanalyse kalibriert. Die Ergebnisse sind in Tabelle 2 aufgelistet.

Tabelle 2

| Probe | Zahlenmittlere Molmasse |
|---|---|
| 1a | 9236 g/mol |
| 1b | 24500 g/mol |
| 1c | 67500 g/mol |

Beispiel 2: Herstellung von Poly(N-butoxymethylacrylamid-co-N,N-dimethylacrylamid), P(BMAm-co-DMAm)

Die Monomere N,N-Dimethylacrylamid (DMAm) und N-Butoxymethylacrylamid (BMAm) wurden zusammen mit dem Initiator 2,2'-Azobisisobutyronitril (AIBN) und dem Kettenregler Trithiokohlensäurebutylester-4-butylsulfanylthiocarbonyl-sulfanylmethyl-benzylester (KR) in den in Tabelle 3 angegebenen Mengen in 300 ml Benzol gelöst. Zuvor wurde das Monomer DMAm sowie Benzol durch Destillation und der Kettenüberträger und der Initiator durch Umkristallisation gereinigt.

Tabelle 3

| Probe | $M_{DMAm}$ [g] | $m_{BMAm}$[g] | $m_{KR}$ [g] | $m_{AIBN}$ [g] | Ausbeute [Gew.-%] |
|---|---|---|---|---|---|
| 2a | 59,12 | 16,625 | 3,075 | 0,310 | 103 |
| 2b | 59,12 | 16,625 | 1,025 | 0,103 | 103 |
| 2c | 59,12 | 16,625 | 0,307 | 0,040 | 111 |

Die erhaltenen Lösungen wurden für 70 min mit einem raschen Stickstoffstrom (< 3ppm $O_2$) gespült. Die gasdicht verschossenen Gefäße wurden anschließend für 24 h in ein Ölbad von 65°C gestellt. Nach 5 h (Ansatz 2c) oder 20 h (übrige Ansätze) wurden die Polymerisationen abgebrochen. Das Benzol wurde am Rotationsverdampfer entfernt. Die Ansätze wurden in je 4 l Ether gefällt, die erhaltenen Niederschläge wurden je 1,2 l Wasser gelöst und gefriergetrocknet. Es ergaben sich pulvrige, stark hygroskopische Polymere.

Die jeweiligen Ausbeuten nach Gefriertrocknung aus Dioxan beziehungsweise Wasser sind in Tabelle 3 verzeichnet. Analyse der Polymere mittels $^1$H-NMR Spektroskopie ergab eine Zusammensetzung aller Proben von 85 mol-% DMAm : 15 mol-% BMAm.

Die Elementaranalyse zeigte die Anwesenheit merklicher Mengen von festgehaltenem Wasser: Elementaranalyse Ansatz 2c: gefunden N: 12.78%, C: 59.46%, H: 9.61%, S: 0.12%. Aus diesen Werten ergibt sich rechnerisch als Zusammensetzung des 4 Komponenten-Gemischs DMAm: 77.3mol%; BMAm: 12.2mol%; KR: 0.1mol%; Wasser: 10.4mol%.

Eine Molmassenbestimmung wurde mittels GPC an Polargel® L-Säulen in Dimethylformamid / 0,1 Gew.-% LiBr bei 50°C durchgeführt. Die Detektion erfolgte mittels Brechungsindex-Detektor. Die Elugramme wurden mit $^1$H-NMR-Endgruppenanalyse kalibriert. Die Ergebnisse sind in Tabelle 4 aufgelistet.

Tabelle 4

| Probe | Zahlenmittlere Molmasse |
|---|---|
| 2a | 9800 g/mol |
| 2b | 35000 g/mol |
| 2c | 90000 g/mol |

Beispiel 3: Erniedrigung der statischen Oberflächenspannung

Unter Verwendung eines TE3-Ring/Platten-Tensiometers von Lauda wurden die Oberflächenspannungen wäßriger Lösungen der in den Beispielen 1 und 2 hergestellten P(BEAm-co-DMAm) und P(BMAm-co-DMAm) Copolymere bei 25°C und pH 8,5 in Wasser gemessen. Die Konzentration des Polymers betrug jeweils 0,2 g/l. In Tabelle 5 sind die so erhaltenen Werte der Reduktion der Oberflächenspannung von Wasser,

$$\Delta\gamma = \gamma(\text{Wasser}) - \gamma(\text{Polymerlösung}),$$

gemessen.

Tabelle 5: Prozentuale Erniedrigung der Oberflächenspannung

| Polymer | $\Delta\gamma$ [%] |
|---|---|
| 1a | 37,5 |
| 1b | 36 |
| 1c | 36 |
| 2a | 41 |
| 2b | 39 |
| 2c | 32 |

Beispiel 4:

Tabelle 6: Waschmittelzusammensetzungen (Angaben in Gew %)

| | A | B | C | D | E | F | G | H |
|---|---|---|---|---|---|---|---|---|
| C9-13-Alkylbenzolsulfonat, Na-Salz | 9 | 10 | 6 | 7 | 5 | 15 | 15 | 9 |

(fortgesetzt)

| | A | B | C | D | E | F | G | H |
|---|---|---|---|---|---|---|---|---|
| C12-18-Fettalkohol mit 7 EO | 8 | 9 | 6 | 7 | 5 | 6 | 11 | 10 |
| C12-14-Fettalkoholsulfat mit 2EO | - | - | 8 | 7 | 10 | 2 | 2 | 5 |
| C12-18-Fettsäure, Na-Salz | 4 | 3 | 3 | 3 | 4 | 2 | 4 | 7 |
| Zitronensäure | 2 | 3 | 3 | 2 | 2 | 2 | 2 | 3 |
| Natriumhydroxid, 50 % | 3 | 3 | 2 | 3 | 3 | 3 | 3 | 4 |
| Borsäure | 1 | 1 | 1 | 1 | 1 | 1 | 1 | 1 |
| Enzyme (Amylase, Protease, Cellulase) | + | + | + | + | + | + | + | + |
| Parfüm | 1 | 0,5 | 0,5 | 1 | 1 | 1 | 1 | 1 |
| Propandiol | - | - | - | - | - | 5 | 5 | - |
| Ethanol | 1,5 | 1,5 | 1,5 | 1,5 | 1,5 | 1,5 | 1,5 | 5 |
| PVA/Maleinsäure-Copolymer | 0,1 | - | 0,1 | - | - | - | - | - |
| Optischer Aufheller | - | 0,1 | - | 0,1 | 0,2 | 0,2 | 0,2 | 0,2 |
| Trübungsmittel | 0,2 | - | - | - | - | - | - | - |
| Phosphonsäure, Na-Salz | 0,5 | 0,5 | 0,5 | 0,5 | 0,5 | 0,5 | 0,5 | 0,5 |
| erfindungswesentliches Polymer | 2 | 2 | 2 | 2 | 2 | 2 | 2 | 2 |
| Wasser | auf 100 | | | | | | | |

Beispiel 5: Waschversuche

Haushaltswaschmaschinen (Miele® W 1514) wurden mit 3,5 kg sauberer Begleitwäsche sowie mit mit standardisierten Anschmutzungen (A: Make up, Nivea® Beaute Stay Real 7 caramel; B: Lippenstift, L'Oreal® 453 rose; C: Lippenstift, Jade Sweet Nectarine® 83) versehenen Testtextilien aus Baumwolle und Schmutzballast beladen. 75 ml des in Beispiel 4 aufgeführten Waschmittels C mit den Polymeren P(BMAm-co-DMAm) 2a oder P(BEAm-co-DMAm) 1b wurden eindosiert und es wurde bei 40°C gewaschen. Nach hängender Trocknung und Mangeln der Testtextilien wurde deren Weißgrad spektralphotometrisch (Minolta® CR200-1) bestimmt. In der nachfolgenden Tabelle 7 sind die Differenzen der Remissionswerte zum ansonsten gleich zusammengesetzten Waschmittel ohne erfindungswesentliches Polymer als Mittelwerte aus 6 Bestimmungen sowie die Fehler bei der 6-fach Bestimmung (LSD) angegeben.

Tabelle 7: Waschergebnisse (Remissionsdifferenz, Angaben in %)

| | Polymer 2a | LSD | Polymer 1b | LSD |
|---|---|---|---|---|
| A | 10,7 | 4,9 | 8,0 | 3,1 |
| B | 3,2 | 2,0 | 5,8 | 2,4 |
| C | 4,9 | 2,2 | 4,0 | 2,5 |

Die Waschmittel mit einem erfindungsgemäß zu verwendenden Wirkstoff zeigten eine deutlich bessere Primärwaschleistung als ansonsten gleich zusammengesetzte Mittel, denen dieser fehlte.

**Patentansprüche**

1. Verwendung von Poly-(N,N-Dimethylacrylamid) und/oder durch Copolymerisation von N,N-Dimethylacrylamid mit einem Co-Monomer, ausgewählt aus Acrylamid, Methacrylamid, N,N-disubstituiertem Acrylamid, N,N-disubstituiertem Methacrylamid, N',N'-disubstituiertem Aminoalkylmethacrylamid, N,N-disubstituiertem Aminoalkylacrylamid, N-Acryloylmorpholin, N-Acryloylpyrrolidin, N-Acryloylpyrrolidon, N-Acryloylpiperidon, N-Acryloylcaprolactam, N-Methacryloylmorpholin, N-Methacryloylpyrrolidin, N-Methacryloylpyrrolidon, N-Methacryloylpiperidon, N-Methacryloylcaprolactam und deren Mischungen, zugänglichen Polymeren zur Verstärkung der Primärwaschkraft von Wasch- oder Reinigungsmitteln beim Waschen von Textilien oder beim Reinigen harter Oberflächen gegenüber Anschmutzungen, wobei in den genannten substituierten Verbindungen die Substituenten aus Wasserstoff, der Benzylgruppe, linearen und verzweigten Alkyl- und Alkoxyalkylgruppen mit 1 bis 6 C-Atomen und deren Mischungen ausgewählt werden mit der Maßgabe, dass es sich bei den Substituenten im N,N-disubstituiertem Acrylamid nicht um 2 Methylgruppen handelt.

2. Verwendung nach Anspruch 1, **dadurch gekennzeichnet, dass** es sich bei den Anschmutzungen um öl- und/oder fetthaltige Anschmutzungen handelt.

3. Verwendung nach Anspruch 1 oder 2, **dadurch gekennzeichnet, dass** es sich bei den Alkylgruppen um Ethyl-, Propyl- oder Butylgruppen oder deren Mischungen handelt.

4. Verwendung nach einem der Ansprüche 1 bis 3, **dadurch gekennzeichnet, dass** es sich bei den Alkoxyalkylgruppen um Alkoxymethylgruppen handelt, und der Alkoxyteil insbesondere eine Propoxy- oder Butoxygruppe ist.

5. Verwendung nach einem der Ansprüche 1 bis 4, **dadurch gekennzeichnet, dass** das Polymer ein aus mehreren Monomeren statistisch zusammengesetztes Copolymer ist, das N,N-Dimethylacrylamid und das oder die weitere(n) Monomere im Molverhältnis von 1:99 bis 99:1, insbesondere von 70:30 bis 98:2 aufweist.

6. Verwendung nach einem der Ansprüche 1 bis 5, **dadurch gekennzeichnet, dass** das Polymer ein mittleres Molekulargewicht (Zahlenmittel) im Bereich von 1000 g/mol bis 500000 g/mol, insbesondere von 1100 g/mol bis 150000 g/mol aufweist.

7. Verfahren zum Entfernen von insbesondere öl- und/oder fetthaltigen Anschmutzungen von Textilien oder harten Oberflächen, bei dem ein Wasch- oder Reinigungsmittel und Poly-(N,N-Dimethylacrylamid) und/oder durch statistische Copolymerisation von N,N-Dimethylacrylamid mit einem Co-Monomer, ausgewählt aus Acrylamid, Methacrylamid, N,N-disubstituiertem Acrylamid, N,N-disubstituiertem Methacrylamid, N',N'-disubstituiertem Aminoalkylmethacrylamid, N,N-disubstituiertem Aminoalkylacrylamid, N-Acryloylmorpholin, N-Acryloylpyrrolidin, N-Acryloylpyrrolidon, N-Acryloylpiperidon, N-Acryloylcaprolactam, N-Methacryloylmorpholin, N-Methacryloylpyrrolidin, N-Methacryloylpyrrolidon, N-Methacryloylpiperidon, N-Methacryloylcaprolactam und deren Mischungen, zugängliches Polymer, wobei in den genannten substituierten Verbindungen die Substituenten aus Wasserstoff, der Benzylgruppe, linearen und verzweigten Alkyl- und Alkoxyalkylgruppen mit 1 bis 6 C-Atomen und deren Mischungen ausgewählt werden mit der Maßgabe, dass es sich bei den Substituenten im N,N-disubstituiertem Acrylamid nicht um 2 Methylgruppen handelt, zum Einsatz kommen.

8. Wasch- oder Reinigungsmittel, enthaltend Poly-(N,N-Dimethylacrylamid) und/oder durch statistische Copolymerisation von N,N-Dimethylacrylamid mit einem Co-Monomer, ausgewählt aus Acrylamid, Methacrylamid, N,N-disubstituiertem Acrylamid, N,N-disubstituiertem Methacrylamid, N',N'-disubstituiertem Aminoalkylmethacrylamid, N,N-disubstituiertem Aminoalkylacrylamid, N-Acryloylmorpholin, N-Acryloylpyrrolidin, N-Acryloylpyrrolidon, N-Acryloylpiperidon, N-Acryloylcaprolactam, N-Methacryloylmorpholin, N-Methacryloylpyrrolidin, N-Methacryloylpyrrolidon, N-Methacryloylpiperidon, N-Methacryloylcaprolactam und deren Mischungen, zugängliches Polymer, wobei in den genannten substituierten Verbindungen die Substituenten aus Wasserstoff, der Benzylgruppe, linearen und verzweigten Alkyl- und Alkoxyalkylgruppen mit 1 bis 6 C-Atomen und deren Mischungen ausgewählt werden mit der Maßgabe, dass es sich bei den Substituenten im N,N-disubstituiertem Acrylamid nicht um 2 Methylgruppen handelt, insbesondere in Mengen von 0,2 Gew.-% bis 10 Gew.-%.

9. Statistisches Copolymer Poly(N-benzyl-N-ethylacrylamid-*co*-N,N-dimethylacrylamid).

10. Statistisches Copolymer Poly(N-butoxymethylacrylamid-*co*-N,N-dimethylacrylamid).

**Claims**

1. The use of poly-(N,N-dimethylacrylamide) and/or polymers that can be obtained by means of copolymerization of N,N-dimethylacrylamide with a co-monomer selected from acrylamide, methacrylamide, N,N-disubstituted acrylamide, N,N-disubstituted methacrylamide, N',N'-disubstituted aminoalkyl methacrylamide, N,N-disubstituted aminoalkylacrylamide, N-acryloylmorpholine, N-acryloylpyrrolidine, N-acryloylpyrrolidone, N-acryloylpiperidone, N-acryloylcaprolactam, N-methacryloylmorpholine, N-methacryloylpyrrolidine, N-methacryloylpyrrolidone, N-methacryloylpiperidone, N-methacryloylcaprolactam and mixtures thereof, in order to strengthen the primary detergency of washing or cleaning agents when washing textiles or cleaning hard surfaces of stains, wherein the substituents in the substituted compounds are selected from hydrogen, the benzyl group, linear and branched alkyl and alkoxyalkyl groups having 1 to 6 carbon atoms and mixtures thereof, with the proviso that the substituents in the N,N-disubstituted acrylamide are not 2 methyl groups.

2. The use according to claim 1, **characterized in that** the stains are stains containing oil and/or fat.

3. The use according to claim 1 or 2, **characterized in that** the alkyl groups are ethyl, propyl or butyl groups or mixtures thereof.

4. The use according to one of claims 1 to 3, **characterized in that** the alkoxyalkyl groups are alkoxymethyl groups, and the alkoxy moiety is in particular a propoxy or butoxy group.

5. The use according to one of claims 1 to 4, **characterized in that** the polymer is a copolymer which is randomly composed of a plurality of monomers and comprises N,N-dimethylacrylamide and the further monomer(s) in a molar ratio of from 1:99 to 99:1, in particular from 70:30 to 98:2.

6. The use according to one of claims 1 to 5, **characterized in that** the polymer has an average molecular weight (number average) in the range of from 1,000 g/mol to 500,000 g/mol, in particular from 1,100 g/mol to 150,000 g/mol.

7. A method for removing stains, in particular stains containing oil and/or fat, from textiles or hard surfaces, in which method a washing or cleaning agent and poly-(N,N-dimethylacrylamide) and/or a polymer that can be obtained by means of random copolymerization of N,N-dimethylacrylamide with a co-monomer selected from acrylamide, methacrylamide, N,N-disubstituted acrylamide, N,N-disubstituted methacrylamide, N',N'-disubstituted aminoalkyl methacrylamide, N,N-disubstituted aminoalkylacrylamide, N-acryloylmorpholine, N-acryloylpyrrolidine, N-acryloylpyrrolidone, N-acryloylpiperidone, N-acryloylcaprolactam, N-methacryloylmorpholine, N-methacryloylpyrrolidine, N-methacryloylpyrrolidone, N-methacryloylpiperidone, N-methacryloylcaprolactam and mixtures thereof are used, wherein the substituents in the substituted compounds mentioned are selected from hydrogen, the benzyl group, linear and branched alkyl and alkoxyalkyl groups having 1 to 6 C atoms and mixtures thereof, with the proviso that the substituents in the N,N-disubstituted acrylamide are not 2 methyl groups.

8. A washing or cleaning agent containing poly-(N,N-dimethylacrylamide) and/or a polymer that can be obtained by means of random copolymerization of N,N-dimethylacrylamide with a co-monomer selected from acrylamide, methacrylamide, N,N-disubstituted acrylamide, N,N-disubstituted methacrylamide, N',N'-disubstituted aminoalkylmethacrylamide, N,N-disubstituted aminoalkyl acrylamide, N-acryloyl morpholine, N-acryloylpyrrolidine, N-acryloylpyrrolidone, N-Acryloylpiperidone, N-acryloylcaprolactam, N-methacryloylmorpholine, N-methacryloylpyrrolidine, N-methacryloylpyrrolidone, N-methacryloylpiperidone, N-methacryloylcaprolactam and mixtures thereof, wherein the substituents in the substituted compounds mentioned are selected from hydrogen, the benzyl group, linear and branched alkyl and alkoxyalkyl groups having 1 to 6 C atoms and mixtures thereof, with the proviso that the substituents in the N,N-disubstituted acrylamide are not 2 methyl groups, in particular in amounts of 0.2 wt.% to 10 wt.%.

9. A random copolymer poly(N-benzyl-N-ethyl acrylamide-co-N,N-dimethylacrylamide).

10. A random copolymer poly(N-butoxymethylacrylamide-co-N,N-dimethylacrylamide).

## Revendications

1. Utilisation d'un poly-(N,N-diméthylacrylamide) et/ou de polymères pouvant être obtenus par copolymérisation de N,N-diméthylacrylamide avec un comonomère choisi parmi l'acrylamide, le méthacrylamide, l'acrylamide N,N-disubstitué, le méthacrylamide N,N-disubstitué, l'aminoalkylméthacrylamide N',N'-disubstitué, l'aminoalkylacrylamide N,N-disubstitué, la N-acryloylmorpholine, la N-acryloylpyrrolidine, la N-acryloylpyrrolidone, la N-acryloylpipéridone, le N-acryloylcaprolactame, la N-méthacryloylmorpholine, la N-méthacryloylpyrrolidine, la N-méthacryloylpyrrolidone, la N-méthacryloylpipéridone, le N-méthacryloylcaprolactame et leurs mélanges, pour renforcer le pouvoir de lavage primaire de produits de lavage ou de nettoyage contre les salissures lors du lavage de textiles ou lors du nettoyage de surfaces dures, les substituants étant choisis parmi l'hydrogène, le groupe benzyle, des groupes alkyle et alcoxyalkyle linéaires et ramifiés avec 1 à 6 atomes de C et leurs mélanges dans les composés substitués mentionnés, à condition que les substituants dans l'acrylamide N,N-disubstitué ne soient pas deux groupes méthyle.

2. Utilisation selon la revendication 1, **caractérisée en ce que** les salissures sont des salissures huileuses et/ou grasses.

3. Utilisation selon la revendication 1 ou 2, **caractérisée en ce que** les groupes alkyle sont des groupes éthyle, propyle ou butyle ou leurs mélanges.

4. Utilisation selon l'une quelconque des revendications 1 à 3, **caractérisée en ce que** les groupes alcoxyalkyle sont des groupes alcoxyméthyle, et la partie alcoxy est en particulier un groupe propoxy ou butoxy.

5. Utilisation selon l'une quelconque des revendications 1 à 4, **caractérisée en ce que** le polymère est un copolymère composé statistiquement de plusieurs monomères, lequel présente un N,N-diméthylacrylamide et le ou les autres monomères dans un rapport molaire de 1:99 à 99:1, en particulier de 70:30 à 98:2.

6. Utilisation selon l'une quelconque des revendications 1 à 5, **caractérisée en ce que** le polymère présente un poids moléculaire moyen (en nombre) compris entre 1 000 g/mol et 500 000 g/mol, en particulier entre 1 100 g/mol et 150 000 g/mol.

7. Procédé permettant d'éliminer en particulier des salissures huileuses et/ou grasses de textiles ou de surfaces dures, ledit procédé mettant en œuvre un produit de lavage ou de nettoyage et un poly(N,N-diméthylacrylamide) et/ou un polymère pouvant être obtenu par copolymérisation statistique d'un N,N-diméthylacrylamide avec un comonomère choisi parmi l'acrylamide, le méthacrylamide, l'acrylamide N-N-disubstitué, le méthacrylamide N,N-disubstitué, l'aminoalkylméthacrylamide N',N'-disubstitué, l'aminoalkylacrylamide N,N-disubstitué, la N-acryloylmorpholine, la N-acryloylpyrrolidine, la N-acryloylpyrrolidone, la N-acryloylpipéridone, le N-acryloylcaprolactame, la N-méthacryloylmorpholine, la N-méthacryloylpyrrolidine, la N-méthacryloylpyrrolidone, la N-méthacryloylpipéridone, le N-méthacryloylcaprolactame et leurs mélanges, les substituants étant choisis parmi l'hydrogène, le groupe benzyle, des groupes alkyle et alcoxyalkyle linéaires et ramifiés avec 1 à 6 atomes de C et leurs mélanges dans les composés substitués mentionnés, à condition que les substituants dans l'acrylamide N,N-disubstitué ne soient pas 2 groupes méthyle.

8. Produit de lavage ou de nettoyage contenant un poly(N,N-diméthylacrylamide) et/ou un polymère pouvant être obtenu par copolymérisation statistique d'un N,N-diméthylacrylamide avec un comonomère choisi parmi l'acrylamide, le méthacrylamide, l'acrylamide N,N-disubstitué, le méthacrylamide N,N-disubstitué, l'aminoalkylméthacrylamide N',N'-disubstitué, l'aminoalkylacrylamide N,N-disubstitué, la N-acryloylmorpholine, la N-acryloylpyrrolidine, la N-acryloylpyrrolidone, la N-acryloylpipéridone, le N-acryloylcaprolactame, la N-méthacryloylmorpholine, la N-méthacryloylpyrrolidine, la N-méthacryloylpyrrolidone, la N-méthacryloylpipéridone, le N-méthacryloylcaprolactame et leurs mélanges, les substituants étant choisis parmi l'hydrogène, le groupe benzyle, des groupes alkyle et alcoxyalkyle linéaires et ramifiés avec 1 à 6 atomes de C et leurs mélanges dans les composés substitués mentionnés, à condition que les substituants dans l'acrylamide N,N-disubstitué ne soient pas deux groupes méthyle, en particulier dans des quantités de 0,2 % à 10 % en poids.

9. Copolymère statistique poly(N-benzyl-N-éthylacrylamide-co-N,N-diméthylacrylamide).

10. Copolymère statistique poly(N-butoxyméthylacrylamide-co-N,N-diméthylacrylamide).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100240563 A
- WO 0157171 A1
- WO 0056849 A1
- WO 03054044 A2
- WO 03066791 A1
- DE 2412837
- EP 0164514 A